# EUROPÄISCHE PATENTSCHRIFT

(11) **EP 2 333 574 B1**
(45) Veröffentlichungstag und Bekanntmachung des Hinweises auf die Patenterteilung: **06.08.2014**
(21) Anmeldenummer: 10192271.4
(22) Anmeldetag: 23.11.2010
(51) Int. Cl.: G01S 3/808, G01S 7/52

(54) **Messgenauigkeitsverbesserungsverfahren, Messgenauigkeitsverbesserungsvorrichtung und Sonaranlage**
Method and device for improving measurement accuracy and sonar assembly
Procédé d'amélioration de l'exactitude de mesure, dispositif d'amélioration de l'exactitude de mesure et installation sonar

(30) Priorität: 03.12.2009 DE 102009056925
(43) Veröffentlichungstag der Anmeldung: 15.06.2011
(73) Patentinhaber: ATLAS ELEKTRONIK GmbH, 28309 Bremen (DE)
(72) Erfinder: Hölscher-Höbing, Ursula, 28207 Bremen (DE)
(74) Vertreter: Weidner Stern Jeschke

(56) Entgegenhaltungen:
- EP-A2- 1 531 455
- DE-A1-102004 016 268
- DE-B3-102006 019 588

## Beschreibung

Die Erfindung betrifft ein Messgenauigkeitsverbesserungsverfahren, eine Messgenauigkeitsverbesserungsvorrichtung und eine Sonaranlage, welche die Messgenauigkeitsverbesserungsvorrichtung aufweist.

Eine herkömmliche Sonaranlage wird zur Ortung von Objekten unter Wasser mittels aktivem oder passivem Sonar eingesetzt. Bei aktivem Sonar werden Wasserschallsignale in Richtung eines Objekts gesendet, von dem Objekt reflektiert und nachfolgend mittels der Sonaranlage empfangen. Eine Ortung mittels passiven Sonars ist möglich, wenn das Objekt eine Geräuschquelle ist bzw. aufweist, die von der Sonaranlage empfangbare Wasserschallsignale aussendet.

Zum Empfang der Wasserschallsignale weist die herkömmliche Sonaranlage mehrere Empfangselemente, insbesondere eine Vielzahl von Empfangselementen, auf. Die Empfangselemente, welche bspw. elektroakustische Wandler sind bzw. aufweisen, generieren in Erwiderung auf empfangene Wasserschallsignale bzw. Wasserschallwellen elektrische Empfangssignale und stellen sie einer Signalverarbeitung bereit.

In der Signalverarbeitung werden bei der bekannten Sonaranlage mehrere Empfangssignale zu Gruppensignalen bzw. Richtungssignalen zusammengefasst, wobei jedem Richtungssignal eine Hauptempfangsrichtung zugeordnet ist. Dabei werden die Empfangssignale vor ihrem Zusammenfassen jeweils geeignet verzögert. Eine jeweils notwendige Verzögerungszeit hängt dabei von der Position eines jeweiligen Wandlerelements ab. Insbesondere wird die Verzögerungszeit bei der bekannten Sonaranlage nach einer Soll-Position bemessen. Die Messgenauigkeit wird bei dieser bekannten Sonaranlage daher durch eine möglichst hohe Präzision bei der Fertigung der Empfangsantenne verbessert. Je näher Ist-Positionen der Wandlerelemente an Soll-Positionen der Empfangselemente liegen, umso höher ist die Messgenauigkeit der Sonaranlage.

Eine Erhöhung der Präzision bei der Fertigung der Empfangsantenne ist aufwändig und teuer. Dennoch ist selbst mit großem Aufwand nur eine begrenzte Präzision erreichbar, die für bestimmte Einsatzzwecke der Sonaranlage nicht ausreichend ist. Insbesondere für eine Ortung von Objekten in einem Nahbereich können Wasserschallsignale mit vergleichsweise höheren Frequenzen empfangen werden als für eine Ortung von Objekten in einem ferneren Fernbereich. Vergleichsweise hohe Frequenzen werden nämlich vergleichsweise stärker im Wasser gedämpft, können im Nahbereich jedoch noch gut empfangen werden und ermöglichen eine vergleichsweise bessere Auflösung zu detektierender Objekte. Das aktive Sonar sendet im Nahbereich deshalb auch vorzugsweise mit einer vergleichsweise höheren Frequenz.

Gerade im Fall vergleichsweise hochfrequenter Wasserschallsignale führen jedoch schon geringste Abweichungen der Ist-Positionen der Empfangselemente von ihren Soll-Positionen zu großen Ungenauigkeiten bei der Messgenauigkeit der Sonaranlage.

Mit einem Messgenauigkeitsverbesserungsverfahren lässt sich die Messgenauigkeit einer Sonaranlage erhöhen, indem für jeweilige Teilwinkel, für welche die Messgenauigkeit erhöht werden soll, Zeitverzögerungskoeffizienten ermittelt werden und diese ermittelten Zeitverzögerungskoeffizienten bei Messungen mit diesem jeweiligen Peilwinkel zur Korrektur der Empfangssignale verwendet werden. Ein derartiges Messgenauigkeitsverbesserungsverfahren ist aus DE 10 2006 019 588 B3 bekannt. Bei diesem bekannten Verfahren werden für jeden jeweiligen Peilwinkel Zeitverzögerungskoeffizienten ermittelt und iterativ optimiert.

Ein weiteres Verfahren, bei dem geeignete Verzögerungskoeffizienten für verschiedene Peilwinkel durch Messungen ermittelt werden, ist aus DE 103 53 292 B3 bekannt. Bei diesen beiden bekannten Verfahren müssen für eine große Anzahl von Peilwinkeln Messungen durchgeführt und Zeitverzögerungskoeffizienten ermittelt werden. Diese Verfahren sind daher mit einem großen messtechnischen Aufwand verbunden.

Ein weiteres Verfahren ist aus der Druckschrift DE 10 2004 016 268 A1 bekannt. Die Druckschrift offenbart insbesondere ein Verfahren und eine Einrichtung zum Bestimmen eines aktuellen effektiven horizontalen Abstandsvektors bei sogenannten LFAS Twin Arrays. Da über die Signallaufzeiten der Signale eine Signalposition ermittelt wird, ist die Bestimmung der horizontalen Abstände, mithin der horizontalen Abstandsvektoren, der Array Elemente besonders kritisch. Die Druckschrift offenbart hierzu ein Verfahren und eine Einrichtung, um störende Signale aus unterschiedlichen Richtungen (rechts/links) wirksam zu unterdrücken. Es wird hierzu eine Kreuzkorrelationsanalyse der Sonarsignale vorgenommen.

Der Erfindung liegt daher die Aufgabe zugrunde, die Messgenauigkeit einer derartigen Sonaranlage, insbesondere im Falle ihres Einsatzes zur Detektion vergleichsweise hochfrequenter Wasserschallsignale, mit vergleichsweise geringem messtechnischem Aufwand zu verbessern.

Die Erfindung löst diese Aufgabe mit einem Messgenauigkeitsverbesserungsverfahren nach Anspruch 1, mit einer Messgenauigkeitsverbesserungsvorrichtung nach Anspruch 6 und mit einer Sonaranlage nach Anspruch 8. Dabei führt die Erfindung mittels eines akustischen Vermessungsmittels ein akustisches Vermessen der Empfangsantenne durch. Dadurch werden sehr präzise Abweichungen von Ist-Positionen der Empfangselemente von ihren SollPositionen erkannt. Diese erkannten Abweichungen werden bei der Signalverarbeitung bei Messungen mittels der Sonaranlage berücksichtigt, so dass eine hohe Messgenauigkeit der Sonaranlage, insbesondere auch für Messungen im Nahbereich und/oder mit vergleichsweise hohen Frequenzen der Wasserschallsignale, ermöglicht wird.

Die Erfindung versucht nicht die Messgenauigkeit der Sonaranlage durch ein Erhöhen der Präzision bei der Fertigung der Empfangsantenne zu erhöhen, sondern verfolgt einen vollkommen anderen Ansatz, indem sie Fertigungsungenauigkeiten zulässt und mittels akustischer Vermessung der Empfangsantenne eine hohe Messgenauigkeit für die Sonaranlage bereitstellt.

Das Messgenauigkeitsverbesserungsverfahren umfasst zum akustischen vermessen der Empfangsantenne mehrere Schritte: Zunächst werden aus den Empfangssignalen, welche in Erwiderung auf die empfangenen Wasserschallsignale generiert werden, Empfangsphasen bestimmt. Erfindungsgemäß werden nachfolgend den Empfangselementen mittels der Empfangsphasen und mittels geschätzter Ist-Positionen der Empfangselemente an der Empfangsantenne Positionsfehler zugewiesen. Schließlich werden neue Ist-Positionen der Empfangselemente mittels der bisherigen geschätzten Ist-Positionen und der Positionsfehler geschätzt.

Die Messgenauigkeitsverbesserungsvorrichtung weist entsprechend akustische Vermessungsmittel auf, welche Empfangsphasenbestimmungsmittel, Positionsfehlerzuweismittel und Ist-Positions-Schätzmittel umfassen. Mittels der Empfangsphasenbestimmungsmittel sind die Empfangsphasen aus den Empfangssignalen bestimmbar. Mittels der Positionsfehlerzuweismittel sind den Empfangselementen Positionsfehler mittels der Empfangsphasen und mittels geschätzter Ist-Position der Empfangselemente an der Empfangsantenne zuweisbar. Mittels der Ist-Positions-Schätzmittel ist eine neue Ist-Position der Empfangselemente mittels der Positionsfehler schätzbar.

Die erfindungsgemäße Sonaranlage weist mehrere Empfangselemente auf, welche an wenigstens einer Empfangsantenne angeordnet sind und mittels welcher Wasserschallsignale empfangbar und in Erwiderung auf die empfangenen Wasserschallsignale die Empfangssignale generierbar sind. Ferner weist die Sonaranlage die erfindungsgemäße Messgenauigkeitsverbesserungsvorrichtung auf.

Die Empfangselemente können einzelne Wasserschallwandier oder Gruppen von Wasserschallwandlern sein. Insbesondere können mehrere Wasserschallwandler parallel zu einer Gruppe zusammengefasst sein. Die Empfangselemente können alternativ oder zusätzlich eine beliebige Vorrichtung oder Gruppe von Vorrichtungen sein, mittels der Wasserschallsignale aus einer oder mehreren Richtungen empfangbar sind. Ein Wasserschallsignal ist dabei als empfangbar zu verstehen, wenn mittels einer beliebigen Vorrichtung ein Signal generierbar ist, mittels dem auf eine Wasserschallwelle geschlossen werden kann, auch wenn dies erst indirekt durch Auswertung von Messwerten, die bspw. eine Temperatur und/oder eine Signallaufzeit umfassen, erfolgt.

Die Empfangsantenne ist bspw. eine Linearantenne, eine Hufeisenantenne, eine Antenne mit Zylinderbasis, eine Kombination dieser Bauformen oder eine beliebige andere Anordnung mehrerer Empfangselemente.

Vorzugsweise umfasst der Schritt zum Bestimmen des Positionsfehlers ein Verzögern der bestimmten Empfangsphasen gemäß Verzögerungswerten, die aus der geschätzten Ist-Position eines jeweiligen Empfangselements in Kombination mit einer geschätzten Ist-Entfernung der Empfangsantenne zur Schallquelle der Wasserschallsignale und mit einem Einfallswinkel der Wasserschallsignale relativ zur Empfangsantenne oder zum jeweiligen Empfangselement ermittelt werden. Als geschätzte Ist-Positionen der Wandlerelemente können dabei zunächst Soll-Positionen dieser Wandlerelemente herangezogen werden. Alternativ können die Ist-Positionen mittels dieses oder eines anderen Verfahrens bereits vorab geschätzt worden sein. Alternativ oder zusätzlich können die Ist-Positionen durch ein konventionelles Vermessen der Empfangsantenne erhalten werden, wobei bspw. ein Lasermessverfahren angewandt wird. Alternativ kann das Verfahren die Ist-Position am Anfang auch selbstständig, insbesondere grob, schätzen.

Die Ist-Entfernung der Empfangsantenne zur Schallquelle und der Einfallswinkel der Wasserschallsignale relativ zur Empfangsantenne ergeben sich beide aus einem Vergleich der Empfangsphasen der Wasserschallsignale untereinander. Im Falle einer Linearantenne und einem Auftrag der bestimmten Empfangsphasen über den Empfangselementen in ihrer Reihenfolge an der Empfangsantenne erhält man eine Ausgleichskurve, deren Krümmung ein Maß für die Ist-Entfernung ist und deren Steigung ein Maß für den Einfallswinkel der Wasserschallsignale relativ zur Empfangsantenne ist.

Für ein Empfangselement, welches bereits selbstständig eine Richtungsinformation der Wasserschallsignale ermittelt, vereinfacht sich das Verfahren entsprechend. Insbesondere kann es dabei vorteilhaft sein, aus der geschätzten Ist-Position des jeweiligen Empfangselements und der Richtung der eintreffenden Wasserschallsignale eine Entfernung jedes Empfangselements zur Schallquelle und einen hierzu passenden Verzögerungswert zu bestimmen.

Vorteilhafterweise umfasst der Schritt zum Bestimmen des Positionsfehlers ein Bestimmen von Phasendifferenzen zwischen den verzögerten Empfangsphasen und einer Referenzphase. Die Referenzphase kann dabei eine der verzögerten oder unverzögerten Empfangsphasen oder eine beliebige andere Vergleichsphase sein. Die Phasendifferenzen ergeben sich als die Differenz aus dieser Referenzphase und den verzögerten Empfangsphasen. Im theoretischen Idealfall einer ungestörten Messung und einem Übereinstimmen der geschätzten Ist-Positionen mit den tatsächlichen Ist-Positionen, einem Übereinstimmen der geschätzten Ist-Entfernung mit der tatsächlichen Ist-Entfernung der Empfangsantenne zur Schallquelle der Wasserschallsignale und im Falle eines Übereinstimmens des ermittelten Einfallswinkels der Wasserschallsignale mit dem tatsächlichen Einfallswinkel ergeben sich im Idealfall gleiche Phasendifferenzen. Abweichende Phasendifferenzen geben insbesondere Aufschluss über Abweichungen der tatsächlichen Ist-Position eines Empfangselements von der geschätzten Ist-Position.

Vorteilhafterweise umfasst der Schritt zum Bestimmen des Positionsfehlers ein Bestimmen und Zuweisen der Positionsfehler mittels der Phasendifferenzen. Dabei wird anhand der ermittelten Phasendifferenzen entweder ein Positionsfehler geschätzt oder, insbesondere mittels mehrerer Messungen bzw. mehrmaliger akustischer Vermessung der Empfangsantenne, insbesondere geometrisch, bestimmt. Die Positionsfehler sind dabei geschätzte oder ermittelte Abweichungen der bisher geschätzten Ist-Position eines jeweiligen Empfangselements von einer aufgrund der Phasendifferenzen vermuteten abweichenden Position.

Vorzugsweise werden die Empfangsphasen fortlaufend in eine Datenbank geschrieben und gemäß dem jeweiligen Verzögerungswert aus dieser Datenbank ausgelesen. In der Datenbank bleiben die Empfangsphasen eine bestimmte Zeit gespeichert, bevor sie mit neuen Empfangsphasen überschrieben werden. Die Empfangsphasen werden in Abhängigkeit von einem Zeitwert und in weiterer Abhängigkeit vom Empfangselement in der Datenbank gespeichert. Ggf. können die Empfangsphasen bereits verzögert in der Datenbank gespeichert werden.

Die Verzögerungswerte zum Auslesen aus der Datenbank sind abhängig vom Einfallswinkel der Wasserschallsignale, von der Entfernung der Empfangsantenne zur Schallquelle der Wasserschallsignale und von der Ist-Position des jeweiligen Empfangselements an der Empfangsantenne. Die Entfernung der Empfangsantenne zur Schallquelle und der Winkel der Empfangsantenne zur Schallquelle ergeben sich aus der Entfernung bzw. dem Winkel eines beliebigen Referenzpunktes, gegenüber dem die Ist-Positionen der Empfangselemente festgelegt sind. Somit ergeben sich aus dieser Entfernung bzw, diesem Winkel der Empfangsantenne zur Schallquelle in Kombination mit der Ist-Position eines jeweiligen Empfangselements eine individuelle Entfernung und ein individueller Winkel dieses Empfangselements zur Schallquelle. Ggf. wird die Empfangsrichtung bzw. der Winkel für ein jeweiliges Empfangselement direkt durch Messung bestimmt. In diesem Fall erhält man aus den Winkeln bzw. Empfangsrichtungen mehrerer Empfangselemente einen Einfallswinkel der Wasserschallsignale relativ zur Empfangsantenne und schließlich eine Entfernung der Empfangsantenne zur Schallquelle.

Der Einfallswinkel der Wasserschallsignale relativ zur Empfangsantenne ist dabei ein Einfallswinkel, welcher sich für Wasserschallsignale ergibt, die am Referenzpunkt der Empfangsantenne eintreffen würden. Die individuellen Einfallswinkel für die einzelnen Empfangselemente unterscheiden sich entfernungsabhängig von diesem Einfallswinkel relativ zur Empfangsantenne.

Vorzugsweise wird die geschätzte Ist-Entfernung aus den Empfangsphasen bestimmt. Insbesondere wird die geschätzte Ist-Entfernung aus den verzögerten Empfangsphasen bestimmt. Die Empfangsphasen werden gemäß einem Verzögerungswert, der sich aus der jeweiligen Ist-Position ergibt, aus der Datenbank ausgelesen, so dass durch einen Vergleich der Empfangsphasen der Empfangselemente eine individuelle Entfernung der Empfangselemente zur Schallquelle bzw. in Kombination mit der Ist-Position der Empfangselemente die Entfernung der Empfangsantenne zur Schallquelle bestimmt werden kann.

Vorzugsweise wird alternativ oder zusätzlich der Einfallswinkel aus den, insbesondere verzögerten, Empfangsphasen bestimmt. Insbesondere dann, wenn der Einfallswinkel nicht direkt mittels der jeweiligen Empfangselemente ermittelt wird, wird der Einfallswinkel der Wasserschallsignale relativ zu den individuellen Empfangselementen bzw. relativ zur Empfangsantenne unter Heranziehung der aus der Datenbank ausgelesenen Empfangsphasen bestimmt.

Ggf. kann die geschätzte Ist-Entfernung und/oder der Einfallswinkel auch ein vorbestimmter bzw. auf andere Weise ermittelter Wert sein. Insbesondere dann, wenn das Verfahren mehrmals durchlaufen werden soll, um die geschätzten Ist-Positionen schrittweise den tatsächlichen Ist-Positionen anzunähern, können bspw. in einem ersten Durchlauf, insbesondere bei Durchführung des Verfahrens in einer Messvorrichtung, die geschätzte Ist-Entfernung und/oder der Einfallswinkel der Wasserschallsignale auf andere Weise ermittelt bzw. vorgegeben werden.

Vorzugsweise wird die Empfangsantenne mittels Wasserschallsignalen vermessen, die von mehreren Positionen relativ zur Empfangsantenne ausgesendet werden. Bspw. kann das Verfahren in einer Versuchsanordnung durchgeführt werden, bei welcher eine Anordnung von mehreren Sendern als Schallquellen von Wasserschallsignalen in einer ggf. bekannten Entfernung zur Empfangsantenne und einem ggf. bekannten Winkel relativ zur Empfangsantenne angeordnet sind. Für die Empfangsquellen ergeben sich somit unterschiedliche Einfallswinkel und/oder unterschiedliche Entfernungen relativ zur Empfangsantenne. Die Sender- bzw. Schallquellen können Sonarsignale mit gleicher oder unterschiedlicher Frequenz gleichzeitig oder vorzugsweise nacheinander senden. Ggf. kann auch ein einziger Sender vorgesehen sein, welcher nacheinander an verschiedenen Positionen relativ zur Empfangsantenne angeordnet wird und von dort Wasserschallsignale aussendet.

Alternativ oder zusätzlich kann die Empfangsantenne relativ zur Schallquelle bzw. zum Sender verschoben und/oder verschwenkt werden. In jedem Fall wird dabei die Empfangsantenne mit Wasserschallsignalen vermessen, die von unterschiedlichen Positionen relativ zur Empfangsantenne ausgesendet werden.

Das Verfahren kann auch mittels reflektierter Wasserschallsignale bspw. eines Sonars oder mit anderen Schallquellen durchgeführt werden. Hierzu werden Wasserschallsignale von wenigstens einer bewegten oder unbewegten Schallquelle bzw. von wenigstens einem bewegten oder unbewegten Objekt empfangen. In jedem Fall werden wiederum Wasserschallsignale von mehreren Positionen relativ zur Empfangsantenne mittels der Empfangsantenne empfangen. Ggf. kann es hierzu erforderlich sein, dass die Empfangsantenne sich bewegt bzw. verschwenkt und/oder verschoben wird. Die Erfindung ermöglicht damit sogar ein Nachjustieren zwischen Messungen im Betrieb, wenn sich z.B. die Empfangsantenne im Betrieb verformt bzw. sich die tatsächlichen Ist-Positionen der Empfangselemente an der Empfangsantenne verändern.

Vorzugsweise wird die Empfangsantenne mittels Wasserschallsignalen vermessen, die von wenigstens einer Schallquelle an einer ersten, einer zweiten und einer dritten Position relativ zur Empfangsantenne ausgesendet werden, wobei die dritte Position abseits einer gedachten durch die erste und die zweite Position verlaufenden Geraden liegt. Insbesondere dann, wenn die Ist-Positionen der Empfangselemente an der Empfangsantenne ungefähr bekannt sind bzw. die bisher geschätzten Ist-Positionen der Empfangselemente weniger als eine Wellenlänge der Wasserschallsignale von den tatsächlichen Ist-Positionen abweichen, ergibt sich eine neue geschätzte Ist-Position eines jeweiligen Empfangselements als einer von zwei möglichen Schnittpunkten von drei Kugeloberflächen, welche die erste, zweite bzw. dritte Position der Schallquelle als Kugelmittelpunkt aufweisen. Einer der beiden Schnittpunkte liegt dabei weit abseits von der Empfangsantenne und kann ausgeschlossen werden, so dass mit diesem Vorwissen eine Vermessung der Empfangsantenne ermöglicht wird.

Wenn jedoch eine zuvor angenommene Ist-Position eines Wandlerelements um mehr als die Wellenlänge λ von der tatsächlichen Ist-Position dieses Empfangselements abweichen kann, ergeben sich aus Messungen zu der ersten und der zweiten Position eine Schaar von Schnittkreisen der jeweiligen Kugeloberflächen. Zusammen mit mehreren Kugeloberflächen um die dritte Position der Schallquelle ergeben sich schließlich zahlreiche Schnittpunkte dieser Schnittkreise mit diesen Kugeloberflächen als mögliche Ist-Position des jeweiligen Empfangselements. Zahlreiche dieser Ist-Positionen können jedoch ausgeschlossen werden, da sie weiter als realer Weise möglich von einer Soll-Position dieses Empfangselements entfernt liegen. Zum Ausschluss etwaig verbleibender Unsicherheiten kann das Verfahren wiederholt oder durch wenigstens eine weitere Messung zu wenigstens einer weiteren Position ergänzt werden.

Vorzugsweise wird die Empfangsantenne mittels Wasserschallsignalen vermessen, welche zusätzlich von einer vierten Position relativ zur Empfangsantenne ausgesendet werden. Die vierte Position liegt dabei abseits einer gedachten durch die erste, zweite und dritte Position verlaufenden Ebene. In diesem Fall ist eine eindeutige Bestimmung der Ist-Position eines Empfangselements möglich, insbesondere wenn diese Ist-Position weniger als eine Wellenlänge λ von einer zuvor vermittelten Ist-Position abweicht, und insbesondere wenn die vierte Position der Schallquelle einen Abstand zu der gedachte Ebene durch die erste, zweite und dritte Position der Schallquellen aufweist, der nicht der halben Wellenlänge λ bzw. nicht einem Vielfachen der halben Wellenlänge λ entspricht.

In einer Weiterbildung kann das Verfahren verbessert werden, wenn Wasserschallsignale mit unterschiedlichen Frequenzen von Schallquellen ausgesendet werden bzw. Wasserschallsignale mit unterschiedlicher Frequenz von den Empfangselementen empfangen werden.

In einer Ausführungsform der Erfindung werden die Positionsfehler durch Schätzung bestimmt und die Empfangsantenne wiederholt solange vermessen, bis die bestimmten Positionsfehler jeweils für sich oder in Kombination unter einem vorgegeben oder vorgebbaren Grenzwert liegen. Ein exaktes Vermessen der jeweiligen Ist-Position ist in diesem Fall nicht notwendig. Vielmehr wird grob geschätzt, in welche Richtung und mit welchem Betrag die geschätzte Ist-Position korrigiert wird. Nach einer derartigen Korrektur wird das Verfahren erneut durchgeführt, so dass sich die geschätzte Ist-Position schrittweise einer tatsächlichen Ist-Position eines jeweiligen Wandlerelements angleicht. Nach mehreren Durchläufen ist die Empfangsantenne auf diese Weise sehr exakt vermessen.

Vorzugsweise werden in einer alternativen Ausführungsform der Erfindung die Positionsfehler geometrisch mittels der ermittelten Empfangsphasen vermessen. Insbesondere werden hierzu die bisherigen Ist-Positionen herangezogen, so dass mit dem Vorwissen der bisherigen Ist-Positionen eine exakte geometrische Bestimmung möglich ist. Ggf. kann das Verfahren auch im Falle der geometrischen Bestimmung der Positionsfehler wiederholt durchgeführt werden, um evtl. Unsicherheiten bezüglich einzelner Ist-Positionen von Empfangselementen zu minimieren.

Die Messgenauigkeitsverbesserungsvorrichtung weist Empfangsphasenbestimmungsmittel, Positionsfehlerzuweismittel und Ist-Positions-Schätzmittel auf. Vorzugsweise weist die Messgenauigkeitsverbesserungsvorrichtung dabei Empfangsphasenverzögerungsmittel, Phasendifferenzbestimmungsmittel und Positionsfehlerbestimmungsmittel auf. Ferner weist die Messgenauigkeitsverbesserungsvorrichtung Mittel auf, mittels denen das erfindungsgemäße Messgenauigkeitsverbesserungsverfahren durchführbar ist.

Weitere Ausführungsformen ergeben sich aus den Ansprüchen sowie aus den anhand der Zeichnung näher erläuterten Ausführungsbeispielen. In der Zeichnung zeigen:
- Fig. 1: eine erfindungsgemäße Vorrichtung gemäß einem Ausführungsbeispiel, die Teil einer erfindungsgemäßen Sonaranlage ist und mittels der das erfindungsgemäße Verfahren durchführbar ist;
- Fig. 2: Positionsfehlerzuweismittel der Vorrichtung gemäß Fig. 1 und ein Positionsfehlerschätzverfahren des Verfahrens gemäß Fig. 1;
- Fig. 3: einen Messaufbau mit vier Sendern als Schallquellen und einer mehrere Empfangselemente aufweisenden Linearantenne als Empfangsantenne;
- Fig. 4: ein Diagramm mit mittels den Empfangselementen von Fig. 3 detektierten Phasen aufgetragen über den Positionen der Empfangselemente an der Empfangsantenne;
- Fig. 5: die Phasen von Fig. 4 korrigiert um Abstandsunterschiede zwischen dem Sender um dem jeweiligen Empfangselement;
- Fig. 6: die Phasen von Fig. 4 korrigiert um den Einfallswinkel der Wasserschallsignale relativ zur Empfangsantenne;
- Fig. 7: ein Diagramm mit Empfangspegeln aufgetragen über einem Winkel relativ zur einer Hauptempfangsrichtung der Wasserschallsignale und über einer Entfernung der Empfangsantenne von der Schallquelle;
- Fig. 8: mit der Antenne gemäß Fig. 6 gemessene Positionsfehler der Empfangselemente an der Antenne;
- Fig. 9: mit und ohne das erfindungsgemäße Verfahren erhaltene Empfangspegel und
- Fig. 10: eine erfindungsgemäße Sonaranlage gemäß einem Ausführungsbeispiel in der Anordnung zur Veranschaulichung der Durchführung des erfindungsgemäßen Verfahrens abseits eines Messaufbaus.

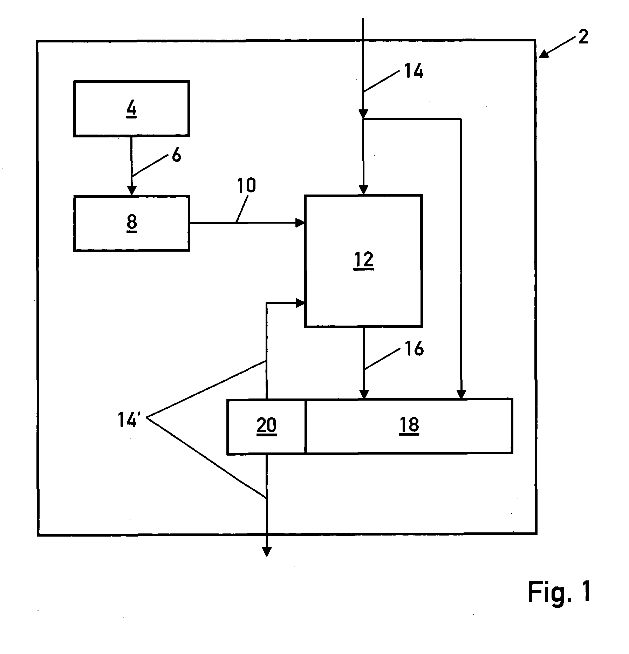

Fig. 1 zeigt eine Messgenauigkeitsverbesserungsvorrichtung mittels der ein erfindungsgemäßes Messgenauigkeitsverfahren 2 durchführbar ist. Mittels wenigstens einer Empfangsantenne 4 werden Empfangssignale 6 generiert und Empfangsphasenbestimmungsmitteln 8 bereitgestellt. Die Empfangsphasenbestimmungsmittel 8 bestimmen aus den Empfangssignalen 6 Empfangsphasen 10, welche sie an Positionsfehlerzuweismittel 12 übermitteln. Die Positionsfehlerzuweismittel 12 erhalten zusätzlich geschätzte Ist-Positionen 14 von Empfangselementen an der Empfangsantenne 4. Aus den Empfangsphasen 10 zusammen mit den geschätzten Ist-Positionen 14 schätzen die Positionsfehlerzuweismittel 12 Positionsfehler 16 der Empfangselemente relativ zur Empfangsantenne 4 und stellen diese Positionsfehler 16 Ist-Positions-Schätzmitteln 18 bereit. Zusammen mit den bisher geschätzten Ist-Positionen 14 schätzen die Ist-Positions-Schätzmittel 18 damit neue Ist-Positionen 14'. Entscheidungsmittel 20 entscheiden, ob die Positionsfehler 16 unter einem vorbestimmten Grenzwert liegen. Wenn die Positionsfehler 16 jeweils für sich oder in Kombination unter dem vorbestimmten bzw. einem vorgegeben oder vorgebbaren Grenzwert liegen, behält das Messgenauigkeitsverbesserungsverfahren 2 die neu geschätzten Ist-Positionen 14' bei. Andernfalls werden die neuen Ist-Positionen 14' erneut den Positionsfehlerzuweismitteln 12 für einen weiteren Durchlauf des Messgenauigkeitsverbesserungsverfahrens 2 bereitgestellt.

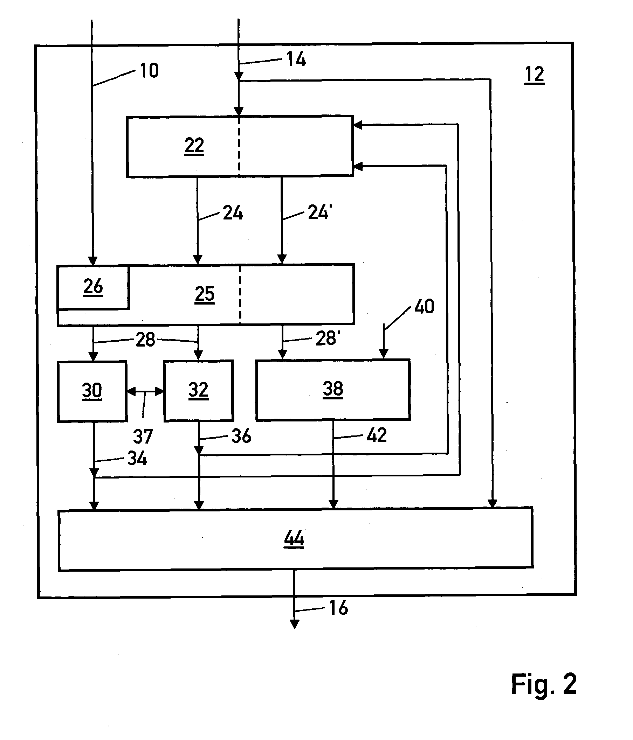

Fig. 2 zeigt die Positionsfehlerzuweismittel 12 von Fig. 1 im Detail. Die geschätzten Ist-Positionen 14 werden Verzögerungswertbestimmungsmitteln 22 bereitgestellt. Die Verzögerungswertbestimmungsmittel 22 bestimmen aus den Ist-Positionen 14 Verzögerungswerte 24. Die Verzögerungswerte 24 werden dabei anhand der geschätzten bzw. vorbestimmten Ist-Positionen der Empfangselemente an der Empfangsantenne 4 für eine angenommene, grob geschätzte oder vorbestimmte Empfangsrichtung verzögert, wobei jeder Ist-Position 14 eines Empfangselements jeweils ein Verzögerungswert für jede Hauptempfangsrichtung empfangener Wasserschallsignale zugeordnet ist. Die geschätzten Ist-Positionen können dabei zunächst auch vorgegebene Soll-Positionen oder mittels eines anderen Verfahrens ermittelte Ist-Positionen der Empfangselemente sein.

Die Verzögerungswerte 24 werden an Empfangsphasenverzögerungsmittel 25 übermittelt. Die Empfangsphasenverzögerungsmittel 25 umfassen eine Datenbank 26, in die fortlaufend neue Empfangsphasen 10 geschrieben werden, wobei ältere in der Datenbank 26 befindliche Empfangsphasen überschrieben werden. In der Datenbank 26 befinden sich somit immer die innerhalb eines Zeitfensters ermittelten Empfangsphasen 10 der Empfangselemente.

Aus der Datenbank 26 werden mittels der Verzögerungswerte 24 verzögerte Empfangsphasen 28 ausgelesen und an Ist-Entfernungsschätzmittel 30 sowie an Einfallswinkel-Schätzmittel 32 übermittelt. Die Ist-Entfernungs-Schätzmittel 30 und die Einfallswinkel-Schätzmittel 32 analysieren zusammen oder getrennt voneinander gleichzeitig oder nacheinander die verzögerten Empfangsphasen 28 und schätzen eine Ist-Entfernung 34 einer Schallquelle zur Empfangsantenne 4 bzw. einen Einfallswinkel 36 der von der Schallquelle ausgesendeten Wasserschallsignale relativ zur Empfangsantenne 4. Ein Doppelpfeil 37 symbolisiert dabei einen evtl. Austausch der geschätzten Ist-Entfernung 34 und/oder des geschätzten Einfallswinkels 36 zwischen dem Ist-Entfernungs-Schätzmittel 30 und dem Einfalls-Schätzmittel 32 bzw. ein gemeinsames Ermitteln der Ist-Entfernung 34 und des Einfallswinkels 36.

Die geschätzte Ist-Entfernung 34 und der geschätzte Einfallswinkel 36 werden von den Verzögerungsbestimmungsmitteln 22 zusammen mit der geschätzten Ist-Position 14 zur Bestimmung neuer Verzögerungswerte 24' herangezogen. Gemäß diesen Verzögerungswerten 24' werden aus der Datenbank 26 verzögerte Empfangsphasen 28' ausgelesen und Phasendifferenzbestimmungsmitteln 38 bereitgestellt. Die Phasendifferenzbestimmungsmittel 38 vergleichen die verzögerten Empfangsphasen 28' mit einer Referenzphase 40, welche entweder von außen zugeführt wird oder auch eine der verzögerten Empfangsphasen 28' sein kann. Die Phasendifferenzbestimmungsmittel 38 ermitteln Phasendifferenzen 42 zwischen den verzögerten Empfangsphasen 28' und der Referenzphase 40 und stellen diese Phasendifferenzen 42 Positionsfehlerbestimmungsmitteln 44 bereit, welche aus diesen Phasendifferenzen 42 zusammen mit der geschätzten Ist-Entfernung 34 und dem geschätzten Einfallswinkel 36 sowie der geschätzten Ist-Position 14 die Positionsfehler 16 ermittelt und für das weitere Verfahren gemäß Fig. 1 bereitstellen.

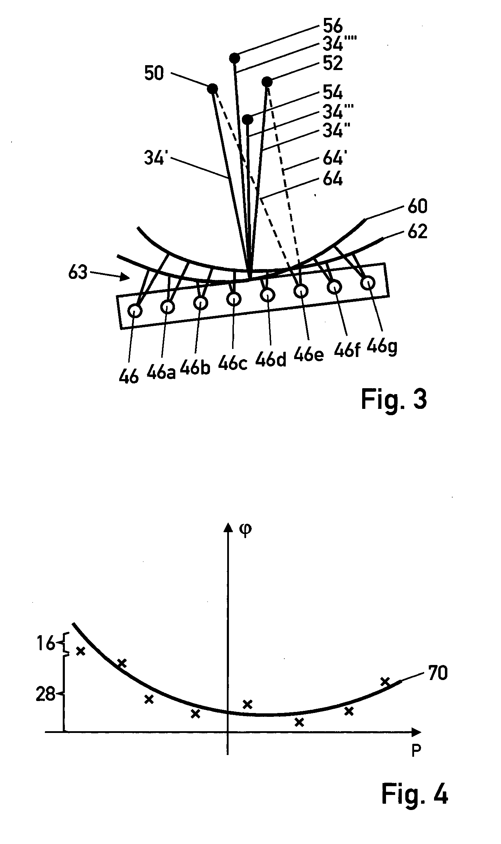

Fig. 3 zeigt die Empfangsantenne 4 von Fig. 1. Die Empfangsantenne 4 weist die in der Beschreibung zu Fig. 2 schon genannten, jedoch noch nicht bezeichneten Empfangselemente 46, 46a, 46b, 46c, 46d, 46e, 46f und 46g auf. Die Empfangsantenne 4 ist in diesem Fall eine Linearantenne, wobei die Empfangselemente 46 bis 46g linear und äquidistant an dieser Empfangsantenne 4 angeordnet sind. Alternativ können jedoch auch andere Antennenformen vorgesehen sein. Anstelle der Empfangselemente 46 bis 46g, die in diesem Fall eine Rundumcharakteristik haben, können auch anders ausgebildete Empfangselemente, die bspw. eine Empfangsrichtung eintreffender Wasserschallsignale selbstständig detektieren können, vorgesehen sein. Auch Gruppen von Schallwandlern, die zusammen ein Empfangselement bilden, können vorgesehen sein.

Die Empfangsantenne 4 ist in einem Messaufbau 48 bzw. an einem Messplatz beabstandet von einem ersten Sender bzw. einer an einer ersten Position befindlichen ersten Schallquelle 50, von einer an einer zweiten Position befindlichen zweiten Schallquelle 52, von einer an einer dritten Position befindlichen dritten Schallquelle 54 und von einer an einer vierten Position befindlichen vierten Schallquelle 56 angeordnet.

Zwischen der Empfangsantenne 4 bzw. einem fest relativ zur Empfangsantenne 4 positionierten Referenzpunkt werden Ist-Entfernungen 34', 34", 34"' und 34"" zur ersten, zweiten, dritten bzw. vierten Schallquelle 50, 52, 54, 56 geschätzt. Ferner werden die Einfallswinkel der Wasserschallsignale, die von diesen Schallquellen 50 bis 56 ausgesendet werden, relativ zum Referenzpunkt ermittelt. Insbesondere zusammen mit den bereits vorab ungefähr bekannten Positionen der Empfangselemente 46 bis 46g an der Empfangsantenne 4 relativ zum Referenzpunkt 58 können auf diese Weise aus ermittelten Phasenbeziehungen sehr genau die Ist-Positionen 14' der Empfangselemente 46 bis 46g an der Empfangsantenne 4 bestimmt werden.

Beispielhaft ist gezeigt, wie eine Wellenfront 60, die von der Schallquelle 50 ausgeht und eine Wellenfront 62, die von der Schallquelle 52 ausgeht, auf die Empfangsantenne 4 trifft, wobei jede Wellenfront noch unterschiedlich weite Wege 63 zu den einzelnen Empfangselementen 46 bis 46g zurücklegen muss und folglich mit einer unterschiedlichen Phase auf die einzelnen Empfangselemente 46 bis 46g trifft. Wege 64 und 64' der Wasserschallsignale, welche von der ersten bzw. zweiten Schallquelle 50, 52 ausgesendet und vom Empfangselement 46e empfangen werden, sind dabei beispielhaft durch gestrichelte Linien angedeutet.

Fig. 4 zeigt ermittelte Phasen ϕ für das Auftreffen der Wellenfront 60 bzw. 62 gemäß Fig. 3 auf die Empfangselemente 46 bis 46g der Empfangsantenne 4 aufgetragen über einer Position P der Empfangselemente 46 bis 46g entlang der Empfangsantenne 4. Gemäß den Verzögerungswerten 24 verzögerten Empfangsphasen 28 weisen die Positionsfehler 16 zwischen den jeweiligen Empfangsphasen 28 und einer Kurve 70 durch die Empfangsphasen 28 auf.

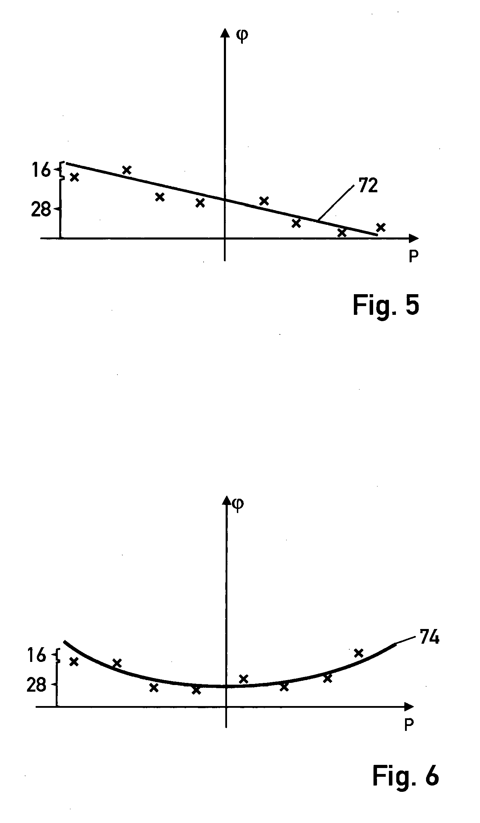

Fig. 5 zeigt die Empfangsphasen 28 von Fig. 4 nach einer Entfernungskorrektur bzw. einen zwar positionsfehlerbehafteten, ansonsten jedoch linearen Anteil einer Phasenbeziehung zwischen den Empfangsphasen. Aus diesem linearen Anteil kann die Einfallsrichtung bzw. der Einfallswinkel 36 der Wasserschallsignale relativ zur Empfangsantenne 4 geschätzt werden. Insbesondere ergibt sich der Einfallswinkel aus einer Steigung einer Geraden 72 bzw. Ausgleichsgeraden durch die aufgetragenen verzögerten Empfangsphasen 28.

Fig. 6 zeigt die verzögerten Empfangsphasen 28' von Fig. 4 korrigiert um den linearen Anteil gemäß Fig. 5. Eine Krümmung einer durch die verzögerten Empfangsphasen 28 verlaufenden Kurve 74 bzw. Ausgleichskurve gibt Aufschluss über die Entfernung der Schallquelle 50 bzw. 52 zur Empfangsantenne 4. Im Falle vergleichsweise geringerer Entfernungen erhöht sich ein Krümmungsgrad. In unendlicher Entfernung sollten die verzögerten Empfangsphasen 28 hingegen auf einer Geraden liegen.

Die Positionsfehler 16 relativ zur Kurve 70, zur Gerade 72 bzw. zur Kurve 74 geben Aufschluss über Distanzen, welche die jeweiligen Empfangselemente 46 bis 46g in jeweiliger Einfallsrichtung der Wasserschallsignale von der jeweiligen Schallquelle 50 bzw. 52 entfernt sind. Mittels Messungen gegenüber Schallquellen 50, 52, 54 und 56 an mehreren Positionen ergeben sich somit mehrere räumliche Komponenten der Positionsfehler 16 der Empfangselemente 46 bis 46g, wodurch eine exakte Ermittlung von neuen Ist-Positionen 14' möglich ist.

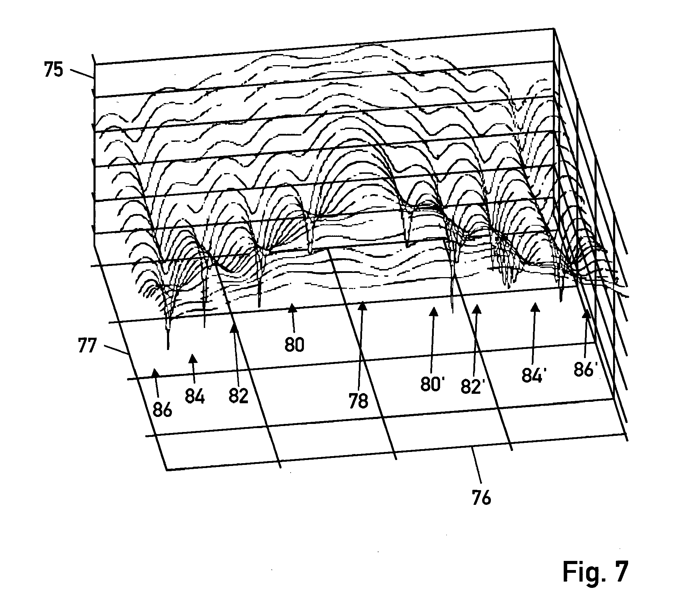

Fig. 7 zeigt Empfangspegel 75 in Abhängigkeit von einem Winkel 76 relativ zu einer gewählten Hauptempfangsrichtung in mehreren Fällen, in denen die Wasserschallsignale aus einer unterschiedlichen Entfernung 77 auf die Empfangsantenne 4 treffen. Die Empfangspegel sind dabei für die Hauptempfangsrichtung generiert, wobei alle Empfangssignale 6 abhängig von ihren Ist-Positionen bzw. geschätzten Ist-Positionen 14, 14' und von dieser Hauptempfangsrichtung geeignet verzögert und zu Gruppensignalen bzw. Richtungssignalen mit dem dargestellten Verlauf des Empfangspegels 75 zusammengefasst werden.

Idealerweise erhält man auf diese Weise eine Hauptkeule 78 und möglichst deutlich davon abgegrenzt mehrere Nebenkeulen 80 und 80', 82 und 82', 84 und 84' sowie 86 und 86'. Die Nebenkeulen 80 bis 86' entstehen, wenn zur Bildung der Gruppensignale Empfangssignale 6 herangezogen werden, welche nach etwaiger Korrekturen um eine Wellenlänge oder mehrere Wellenlängen untereinander verzögert sind.

Wenn die Ist-Entfernung 34 korrekt geschätzt ist, ist die Unterscheidung der Hauptkeule 78 von den Nebenkeulen 80 bis 86' deutlich. Andernfalls werden Signale mit unterschiedlicher Phase aufsummiert, so dass die Keulen 78 bis 86' breiter werden und weniger scharf voneinander abgegrenzt sind.

In einer Ausführungsform ist die Messgenauigkeitsverbesserungsvorrichtung 1 daher so ausgebildet, dass sie mittels der Empfangssignale 6 bzw. mittels einer Breite der Empfangskeulen 80 bis 86' bzw. mittels des Pegelverlaufs der Empfangssignale 6 in Abhängigkeit vom Winkel 76 die Ist-Entfernung 34 der Empfangsantenne 4 zur Schallquelle 50 bis 56 schätzt.

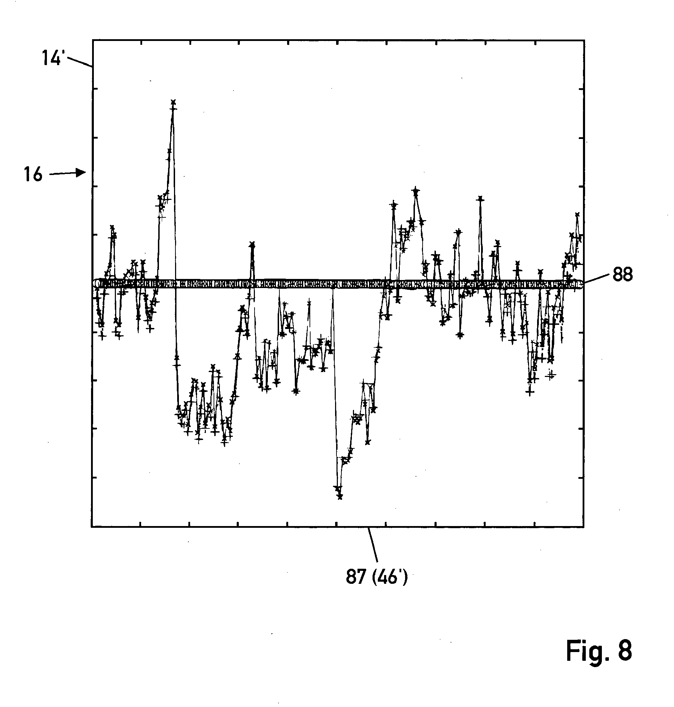

Fig. 8 zeigt ermittelte Antennenpositionen bzw. geschätzte Ist-Positionen 14' bzw. eine Komponente dieser geschätzten Ist-Positionen 14' für einzelne Empfangselemente 46' an einer Empfangsantenne 4'. Die geschätzten Ist-Positionen 14' der Empfangselemente 46' sind über ihrer Anordnung 87 an der Empfangsantenne 4' aufgetragen. Abweichend von Soll-Positionen 88 ergeben sich unterschiedlich große positive oder negative Positionsfehler 16 als Differenz zwischen einer jeweiligen geschätzten Ist-Position 14' und der Soll-Position 88.

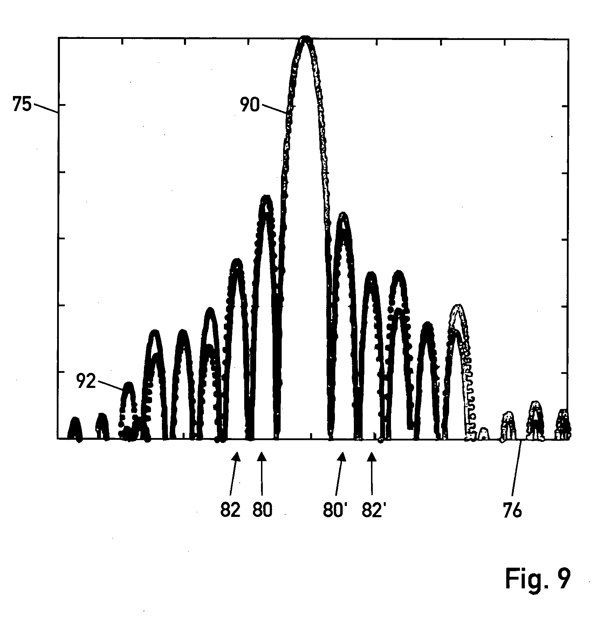

Fig. 9 zeigt einen Dämpfungsverlauf bzw. Pegelverlauf 90, der sich aus einer Messung mit einer Sonaranlage ergibt, deren Empfangsantenne 4, 4' zuvor mit dem erfindungsgemäßen Messgenauigkeitsverbesserungsverfahren 2 akustisch vermessen wurde. Dabei ist der Empfangspegel 75 über dem vermeintlichen Einfallswinkel 76 der Wasserschallsignale aufgetragen. Hiernach ergibt sich der als Linie veranschaulichte Pegelverlauf 90 nach Durchführung des Messgenauigkeitsverbesserungsverfahrens 2. Ein als gepunktete Linie dargestellter Pegelverlauf 92 zeigt ein entsprechendes Messergebnis ohne vorherige Durchführung des Messgenauigkeitsverbesserungsverfahrens bzw. ohne Kompensation der Positionsfehler 16. Insbesondere die Nebenkeulen 80 und 80' sowie 82 und 82' weisen nach einer Kompensation der Positionsfehler 16 gegenüber einer Messung ohne derartige Kompensation stärker ausgebildete Spitzen bzw. größere Maxima auf.

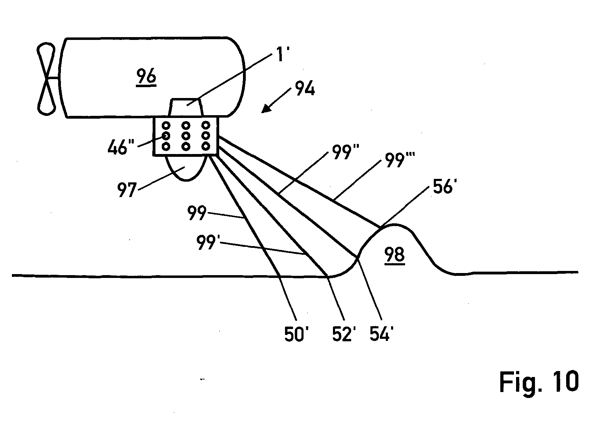

Fig. 10 zeigt eine erfindungsgemäße Sonaranlage 94, welche in bzw. an einem Unterwassergefährt 96 angebracht ist. Die Sonaranlage 94 weist eine als Zylinderbasis ausgebildete Empfangsantenne 4" auf. An der Empfangsantenne 4" sind ringsrum Empfangselemente 46" angebracht, welche mehrere jeweils hier in vertikaler Richtung übereinander angeordnete Wasserschallwandler aufweisen. Ein Sonarsender 97 sendet aktiv Wasserschallsignale aus, welche bspw. von einer Felserhebung 98 am Boden des Gewässers hart reflektiert und mittels der Empfangsantenne 4" empfangen werden. Reflexionsorte wirken dabei als Schallquellen 50', 52', 54'und 56'.

Mittels an diesen Reflexionsorten reflektierten und an der Empfangsantenne 4 auftreffenden Wasserschallsignalen 99, 99', 99" und 99"' ermittelt die Sonaranlage 94 bzw. die Messgenauigkeitsverbesserungsvorrichtung 1' der Sonaranlage 94 mittels des Messgenauigkeitsverbesserungsverfahrens 2 neue Ist-Positionen 14" der Empfangselemente 46" an der Empfangsantenne 4". Gleich danach kann die Sonaranlage 94 von der Durchführung des Messgenauigkeitsverbesserungsverfahrens 2 in einen Messbetrieb umgestellt werden und Messungen mittels Sonar durchführen, bei denen Positionsfehler 16 korrigiert werden, so dass eine größere Messgenauigkeit erreicht wird als ohne Korrektur der Positionsfehler 16.

Die beschriebenen Ausführungsbeispiele veranschaulichen beispielhaft die Erfindung, sind jedoch nicht einschränkend zu verstehen. Insbesondere kann das erfindungsgemäße Messgenauigkeitsverbesserungsverfahren 2 mittels aktiven oder passiven Sonars an einem Messplatz oder abseits davon durchgeführt werden. Als Empfangselemente 46 bis 46" sind jegliche Anordnungen zu verstehen, die aus Wasserschall direkt oder indirekt Signale generieren, die eine Bestimmung von Empfangsphasen 10 ermöglichen. Durch mittels bestimmter Empfangselemente gewonnene Zusatzinformationen, wie bspw. einem Einfallswinkel 36, kann das beschriebene Messgenauigkeitsverbesserungsverfahren 2 sich vereinfachen, indem entsprechende Schritte in für den Fachmann naheliegenderweise variiert durchgeführt werden bzw. z.T. auch nicht mehr durchgeführt werden brauchen.

## Patentansprüche

1. Messgenauigkeitsverbesserungsverfahren (2) zum Verbessern der Messgenauigkeit einer Sonaranlage (94), die mehrere Empfangselemente (46, 46',46") aufweist, welche an wenigstens einer Empfangsantenne (4, 4', 4") angeordnet sind, welche Wasserschallsignale (90, 90',90",90"') empfangen und welche in Erwiderung auf die empfangenen Wasserschallsignale (90, 90', 90", 90"') Empfangssignale (6) generieren,
wobei das Messgenauigkeitsverbesserungsverfahren (2)
- ein Bestimmen von Empfangsphasen (10) aus den Empfangssignalen (6),
umfasst,
aufweisend
ein akustisches Vermessen der Empfangsantenne (4, 4', 4"), welches das Bestimmen von Empfangsphasen (10) aus den Empfangssignalen (6) umfasst, mit den weiteren Schritten:
- Zuweisen von Positionsfehlern (16) zu den Empfangselementen (46, 46', 46") mittels der Empfangsphasen (10) und mittels geschätzter Ist-Positionen (14, 14', 14") der Empfangselemente (46,46',46") an der Empfangsantenne (4,4',4") und
Schätzen neuer Ist-Positionen (14', 14") der Empfangselemente (46, 46', 46") mittels der bisherigen geschätzten Ist-Positionen (14, 14', 14") und der Positionsfehler (16),
**gekennzeichnet durch**
folgende Schritte zum Bestimmen des Positionsfehlers (16):
- Verzögern der bestimmten Empfangsphasen (10) gemäß Verzögerungswerten (24'), die aus der geschätzten Ist-Position (14, 14', 14") eines jeweiligen Empfangselements (46, 46', 46") in Kombination mit einer geschätzten Ist-Entfernung (34) der Empfangsantenne (4, 4', 4") zur Schallquelle (50, 52, 54) der Wasserschallsignale (90, 90', 90",90"') und mit einem Einfallswinkel (36) der Wasserschallsignale (90, 90', 90", 90"') relativ zur Empfangsantenne (4, 4', 4") oder zum jeweiligen Empfangselement (46, 46', 46") ermittelt werden,
- Bestimmen von Phasendifferenzen (42) zwischen den verzögerten Empfangsphasen (28, 28') und einer Referenzphase (40) und
- Bestimmen und Zuweisen der Positionsfehler (16) mittels der Phasendifferenzen (42),
- wobei die Empfangsphasen (10) fortlaufend in eine Datenbank (26) geschrieben und gemäß dem jeweiligen Verzögerungswert (24, 24') aus dieser Datenbank (26) ausgelesen werden und wobei die geschätzte Ist-Entfernung (74) und/oder der Einfallswinkel (36) aus den, insbesondere verzögerten, Empfangsphasen (28, 28') bestimmt wird.

2. Verfahren nach Anspruch 1,
**dadurch gekennzeichnet, dass**
die Empfangsantenne (4, 4', 4") mittels Wasserschallsignalen (90,90',90", 90"') vermessen wird, die von wenigstens einer Schallquelle (50, 52, 54, 56) an einer ersten, einer zweiten und einer dritten Position relativ zur Empfangsantenne (4, 4', 4") ausgesendet werden, wobei die dritte Position der Schallquelle (54) abseits einer gedachten durch die erste und zweite Position der Schallquellen (50, 52) verlaufenden Geraden liegt.

3. Verfahren nach Anspruch 2,
**dadurch gekennzeichnet, dass**
die Empfangsantenne auch mittels Wasserschallsignalen (90, 90', 90", 90"') vermessen wird, die von einer Schallquelle (56) an einer vierten Position relativ zur Empfangsantenne (4, 4', 4") ausgesendet werden, wobei die vierte Position der Schallquelle (56) abseits einer gedachten durch die erste, zweite und dritte Position der Schallquellen (50, 52, 54) verlaufenden Ebene liegt.

4. Verfahren nach einem der vorherigen Ansprüche,
**dadurch gekennzeichnet, dass**
die Positionsfehler (16) durch Schätzung bestimmt werden und die Empfangsantenne (4, 4', 4") wiederholt solange akustisch vermessen wird, bis die bestimmten Positionsfehler (16) jeweils für sich oder in Kombination unter einem vorgegebenen oder vorgebbaren Grenzwert liegen.

5. Verfahren nach einem der Ansprüche 1 bis 3,
**dadurch gekennzeichnet, dass**
die Positionsfehler (16) geometrisch mittels der ermittelten Empfangsphasen (10, 28, 28'), insbesondere unter Heranziehung der bisherigen Ist-Positionen (14, 14', 14"), vermessen werden.

6. Messgenauigkeitsverbesserungsvorrichtung (1, 1') zum Verbessern der Messgenauigkeit einer Sonaranlage (94), die mehrere Empfangselemente (46,46', 46") aufweist, welche an wenigstens einer Empfangsantenne (4, 4',4") angeordnet sind und mittels welcher Wasserschallsignale (90,90', 90",90"') empfangbar und in Erwiderung auf die empfangenen Wasserschallsignale (90, 90', 90", 90"') Empfangssignale (6) generierbar sind, wobei die Messgenauigkeitsverbesserungsvorrichtung (1, 1')
- Empfangsphasenbestimmungsmittel (8), mittels denen Empfangsphasen (10) aus den Empfangssignalen (6) bestimmbar sind,
aufweist,
aufweisend
akustische Vermessungsmittel, welche die Empfangsphasenbestimmungsmittel (8) aufweisen und mittels denen die Empfangsantenne (4,4', 4") akustisch vermessbar ist, aufweisend:
- Positionsfehlerzuweismittel (12), mittels denen den Empfangselementen (46,46', 46") Positionsfehler (16) mittels der Empfangsphasen (10) und mittels geschätzter Ist-Positionen (14, 14', 14") der Empfangselemente (46,46',46") an der Empfangsantenne (4,4',4") zuweisbar sind, und
- Ist-Positions-Schätzmittel (18), mittels denen eine neue Ist-Position (14', 14") der Empfangselemente (46,46',46") mittels der Positionsfehler (16) schätzbar ist,
**gekennzeichnet durch**
- Empfangsphasenverzögerungsmittel (25), mittels denen die bestimmten Empfangsphasen (10) gemäß Verzögerungswerten (24') verzögerbar sind, wobei die Verzögerungswerte (24') ermittelbar sind aus
der geschätzten Ist-Position (14, 14', 14") eines jeweiligen Empfangselements (46, 46', 46") in Kombination mit einer geschätzten Ist-Entfernung (34) der Empfangsantenne (4, 4', 4") zur Schallquelle (50,
52, 54, 56) der Wasserschallsignale (90, 90', 90", 90"') und mit einem geschätzten Einfallswinkel (36) der Wasserschallsignale (90, 90', 90", 90'") relativ zur Empfangsantenne (4, 4', 4"),
- Phasendifferenzbestimmungsmit tel (38), mittels denen Phasendifferenzen (42) zwischen den verzögerten Empfangsphasen (28, 28')
und einer Referenzphase (40) bestimmbar sind, und
- Positionsfehlerbestimmungsmittel (44), mittels denen die Positionsfehler (16) mittels der Phasendifferenzen (42) bestimmbar und den Empfangselementen (46,46',46") zuweisbar sind.

7. Messgenauigkeitsverbesserungsvorrichtung nach Anspruch 6, aufweisend Mittel, mittels denen das Verfahren nach einem der Ansprüche 1 bis 5 durchführbar ist.

8. Sonaranlage, aufweisend:
- mehrere Empfangselemente (46,46',46"), welche an wenigstens einer Empfangsantenne (4,4',4") angeordnet sind und mittels welcher Wasserschallsignale (99, 99', 99", 99"') empfangbar und in Erwiderung auf die empfangenen Wasserschallsignale (99, 99', 99", 99"') Empfangssignale (6) generierbar sind, und
- eine Messgenauigkeitsverbesserungsvorrichtung (1, 1') nach einem der Ansprüche 6 oder 7.

## Claims

1. A measurement accuracy improvement method (2) for improving the measuring accuracy of a sonar system (94), which comprises multiple receiving elements (46, 46', 46"), which are disposed on at least one receiving antenna (4, 4', 4"), which receive underwater sound signals (90, 90', 90", 90"') and which generate received signals (6) in response to the received underwater sound signals (90, 90', 90", 90"'), wherein the measurement accuracy improvement method (2) includes
- a determination of reception phases (10) from the received signals (6),
comprising
an acoustic calibration of the receiving antenna (4, 4', 4"), which includes the determination of reception phases (10) from the received signals (6), with the additional steps of:
- assigning position errors (16) to the receiving elements (46, 46', 46") by means of the reception phases (10) and by means of estimated actual positions (14, 14', 14") of the receiving elements (46, 46', 46") on the receiving antenna (4, 4', 4") and estimating new actual positions (14, 14') of the receiving elements (46, 46', 46") by means of previous estimated actual positions (14, 14', 14") and of the position errors (16),
**characterized by**
the following steps for determining the position error (16):
- delaying the determined reception phases (10) in accordance with delay values (24'), which are determined based on estimated actual positions (14, 14', 14") of a respective receiving element (46, 46', 46") in combination with an estimated actual distance (34) between the receiving antenna (4, 4', 4") and the sound source (50, 52, 54) of the underwater sound signals (90, 90', 90", 90"') and with an incidence angle (36) of the underwater sound signals (90, 90', 90", 90"') relative to the receiving antenna (4, 4', 4") or to the respective receiving element (46, 46', 46"),
- determining phase differences (42) between the delayed reception phases (28, 28') and a reference phase (40) and
- determining and assigning the position errors (16) by means of the phase differences (42),
- the reception phases (10) being continuously recorded in a database (26) and read out from that database (26) according to the respective delay value (24, 24') and the estimated actual distance (74) and/or the incidence angle (36) are determined based on the, more specifically delayed, reception phases (28, 28').

2. The method according to claim 1,
**characterized in that**
the receiving antenna (4, 4', 4") is calibrated by means of underwater sound signals (90, 90', 90", 90"'), which are emitted by at least one sound source (50, 53, 54, 56) in a first, a second and a third position relative to the receiving antenna (4, 4', 4"), the third position of the sound source (54) being located aside from an imaginary straight line running through the first and second positions of the sound sources (50, 52).

3. The method according to claim 2,
**characterized in that**
the receiving antenna is also calibrated by means of underwater sound signals (90, 90', 90", 90"'), which are emitted by a sound source (56) in a fourth position relative to the receiving antenna (4, 4', 4"), the fourth position of the sound source (56) being located aside from an imaginary plane running through the first, second and third position of the sound sources (50, 52, 54).

4. The method according to one of the afore-mentioned claims,
**characterized in that**
the position errors (16) are determined by an estimation and the receiving antenna (4, 4', 4") is repeatedly calibrated acoustically until the determined position errors (16) are below a predetermined or predeterminable limit-value, respectively separately or combined.

5. The method according to one of the claims 1 to 3,
**characterized in that**
the position errors (16) are measured geometrically by means of the determined reception phases (10, 28, 28'), more specifically using the previous actual positions (14, 14', 14").

6. A measurement accuracy improvement device (1, 1') for improving the measurement accuracy of a sonar system (94), which comprises multiple receiving elements (46, 46', 46"), which are disposed on at least one receiving antenna (4, 4', 4") and by means of which underwater sound signals (90, 90', 90", 90"') are receivable and received signals (6) are generatable in response to the received underwater sound signals (90, 90', 90", 90"'), the measurement accuracy improvement device (1, 1') comprising:
- reception phase determining means (8), by means of which reception phases (10) are determinable from the received signals (6),
comprising
acoustic calibration means, which comprise the reception phase determining means (8) and by means of which the receiving antenna (4, 4', 4") is acoustically calibratable, comprising:
- position error assigning means (12), by means of which position errors (16) are assignable to the receiving elements (46, 46', 46") by means of the reception phases (10) and by means of estimated actual positions (14, 14', 14") of the receiving elements (46, 46', 46") on the receiving antenna (4, 4', 4"), and
- actual position estimating means (18), by means of which a new actual position (14', 14") of the receiving elements (46, 46', 46") are estimatable by means of the position errors (16),
**characterized by**
- reception phase delaying means (25), by means of which the determined reception phases (10) are delayable according to delay values (24'), the delay values (24') being determinable
from
the estimated actual position (14, 14', 14") of a respective receiving element (46, 46', 46") in combination with an estimated actual distance (24) between the receiving antenna (4, 4', 4") and the sound source (50, 52, 54, 56) of the underwater sound signals (90, 90', 90", 90"') and with an estimated incidence angle (36) of the underwater sound signals (90, 90', 90", 90"') relative to the receiving antenna (4, 4', 4"),
- phase difference determining means (38), by means of which phase differences (42) between the delayed reception phases (28, 28') and a reference phase (40) are determinable, and
- position error determining means (44), by means of which the position errors (16) are determinable by means of the phase differences (42) and are assignable to the receiving elements (46, 46', 46").

7. The measurement accuracy improvement device according to claim 6, comprising means, by means of which the method according to one of the claims 1 to 5 is implementable.

8. A sonar system, comprising:
- multiple receiving elements (46, 46', 46"), which are disposed on at least one receiving antenna (4, 4', 4") and by means of which underwater sound signals (99, 99', 99", 99"') are receivable and received signals (6) are generatable in response to the received underwater sound signals (99, 99', 99", 99"'), and
- a measurement accuracy improvement device (1, 1') according to one of the claims 6 or 7.

## Revendications

1. Méthode d'amélioration de la précision de mesure (2) pour améliorer la précision de mesure d'une installation sonar (94) comprenant plusieurs éléments de réception (46, 46', 46") disposés sur au moins une antenne de réception (4, 4', 4") qui reçoivent des signaux sonores sous-marins (90, 90', 90", 90"') et qui génèrent des signaux reçus (6) en réponse aux signaux sonores sous-marins (90, 90', 90", 90"') reçus,
la méthode d'amélioration de la précision de mesure (2) comportant
- la détermination de phases de réception (10) à partir des signaux reçus (6), comprenant
un calibrage acoustique de l'antenne de réception (4, 4', 4") qui comporte la détermination de phases de réception (10) à partir des signaux reçus (6), avec les étapes additionnelles suivantes :
- attribution d'erreurs de position (16) aux éléments de réception (46, 46', 46") au moyen des phases de réception (10) et au moyen de positions réelles (14, 14', 14") estimées des éléments de réception (46, 46', 46") sur l'antenne de réception (4, 4', 4") et
estimation de nouvelles positions (14', 14") des éléments de réception (46, 46', 46") au moyen des positions réelles (14, 14', 14") estimées jusqu'à présent et des erreurs de position (16),
**caractérisée par**
les étapes suivantes pour déterminer l'erreur de position (16) :
- retardement des phases de réception (10) déterminées en fonction de valeurs de retardement (24') déterminées à partir de la position réelle (14, 14', 14") estimée d'un élément de réception (46, 46', 46") respectif en combinaison avec une distance réelle (34) entre l'antenne de réception (4, 4', 4") et la source sonore (50, 52, 54) des signaux sonores sous-marins (90, 90', 90", 90"') et avec un angle d'incidence (36) des signaux sonores sous-marins (90, 90', 90", 90"') par rapport à l'antenne de réception (4, 4', 4") ou à l'élément de réception (46, 46', 46") respectif,
- détermination de différences de phases (42) entre les phases de réception retardées (28, 28') et une phase de référence (40) et
- détermination et attribution des erreurs de position (16) au moyen des différences de phases (42),
- où les phases de réception (10) sont continuellement enregistrées dans une base de données (26) et lues dans cette base de données (26) selon la valeur de retardement (24, 24') respective et où la distance réelle (74) estimée et/ou l'angle d'incidence (36) est déterminé à partir des phases de réception (28, 28'), notamment retardées.

2. Méthode selon la revendication 1,
**caractérisée en ce que**
l'antenne de réception (4, 4', 4") est mesurée au moyen de signaux sonores sous-marins (90, 90', 90", 90"') qui sont émis par au moins une source sonore (50, 52, 54, 56) en une première, une deuxième et une troisième position par rapport à l'antenne de réception (4, 4', 4"), la troisième position de la source sonore (54) se trouvant à l'écart d'une ligne droite imaginaire passant par la première et la deuxième position des sources sonores (50, 52).

3. Méthode selon la revendication 2,
**caractérisée en ce que**
l'antenne de réception est également calibrée au moyen de signaux sonores sous-marins (90, 90', 90", 90"') qui sont émis par une source sonore (56) en une quatrième position par rapport à l'antenne de réception (4, 4', 4"), la quatrième position de la source sonore (56) se trouvant à l'écart d'un plan imaginaire passant par la première, la deuxième et la troisième position des sources sonores (50, 52, 54).

4. Méthode selon l'une quelconque des revendications précédentes,
**caractérisée en ce que**
les erreurs de position (16) sont déterminées par estimation et l'antenne de réception (4, 4', 4") est calibrée acoustiquement de façon répétée jusqu'à ce que les erreurs de position (16) déterminées se trouvent, respectivement à part ou en combinaison, en-dessous d'une valeur limite prédéterminée ou prédéterminable.

5. Méthode selon l'une quelconque des revendications 1 à 3,
**caractérisée en ce que**
les erreurs de position (16) sont mesurées géométriquement au moyen des phases de réception (10, 28, 28') déterminées, notamment en utilisant les positions réelles (14, 14', 14") précédentes.

6. Dispositif d'amélioration de la précision de mesure (1, 1') pour améliorer la pression de mesure d'une installation sonar (94) qui comprends plusieurs éléments de réception (46, 46', 46") qui sont disposés sur au moins une antenne de réception (4, 4', 4") et au moyen desquels des signaux sonores sous-marins (90, 90', 90", 90"') sont recevables et des signaux reçus (6) sont aptes à être générés en réponse aux signaux sonores sous-marins (90, 90', 90", 90"') reçus,
où le dispositif d'amélioration de la précision de mesure (1, 1') comprend
- des moyens de détermination de phases de réception (8), au moyen desquels des phases de réception (10) sont déterminables à partir des signaux reçus (6), comprenant
des moyens de calibrage acoustiques qui comprennent les moyens de détermination de phases de réception (8) et au moyen desquels l'antenne de réception (4, 4', 4") est acoustiquement calibrable, comprenant :
- des moyens d'attribution d'erreurs de position (12), au moyen desquels des erreurs de position (16) sont attribuables aux éléments de réception (46, 46', 46") au moyen des phases de réception (10) et au moyen de positions réelles (14, 14', 14") estimées des éléments de réception (46, 46', 46") sur l'antenne de réception (4, 4', 4"), et
- des moyens d'estimation de positions réelles (18), au moyen desquels une nouvelle position réelle (14', 14") des éléments de réception (46, 46', 46") est estimable au moyen des erreurs de position (16),
**caractérisé par**
- des moyens de retardement de phases de réception (25), au moyen desquels les phases de réception (10) déterminées sont aptes à être retardés selon des valeurs de retardement (24'), les valeurs de retardement (24') étant déterminables à partir de
la position réelle estimée (14, 14', 14") d'un élément de réception (46, 46', 46") respectif en combinaison avec une distance réelle (34) estimée entre l'antenne de réception (4, 4', 4") et la source sonore (50, 52, 54, 56) des signaux sonores sous-marins (90, 90', 90", 90"') et avec un angle d'incidence (36) estimé des signaux sonores sous-marins (90, 90', 90", 90"') par rapport à l'antenne de réception (4, 4', 4"),
- des moyens de détermination de différences de phases (38), au moyen desquels des différences de phase (42) entre les phases de réception (28, 28') retardées et une phase de référence (40) sont déterminables, et
- des moyens de détermination d'erreurs de position (44), au moyen desquels les erreurs de position (16) sont déterminables au moyen des différences de phase (42) et sont attribuables aux éléments de réception (46, 46', 46").

7. Dispositif d'amélioration de la précision de mesure selon la revendication 6, comprenant des moyens au moyen desquels la méthode selon les revendications 1 à 5 est réalisable.

8. Installation sonar, comprenant :
- plusieurs éléments de réception (46, 46', 46") qui sont disposés sur au moins une antenne de réception (4, 4', 4") et au moyen desquels des signaux sonores sous-marins (99, 99', 99", 99"') sont recevables et des signaux reçus (6) sont aptes à être générés en réponse aux signaux sonores sous-marins (99, 99', 99", 99"') reçus, et
- un dispositif d'amélioration de la précision de mesure (1, 1') selon l'une des revendications 6 ou 7.
